# EUROPÄISCHE PATENTSCHRIFT

(11) **EP 2 984 922 B1**
(45) Veröffentlichungstag und Bekanntmachung des Hinweises auf die Patenterteilung: **22.08.2018**
(21) Anmeldenummer: 15177337.1
(22) Anmeldetag: 17.07.2015
(51) Int. Cl.: A01F 15/07

(54) **BALLENWICKELEINRICHTUNG**
BALE ROLLING DEVICE
DISPOSITIF D'ENRUBANNAGE DE BALLES

(30) Priorität: 08.08.2014 DE 102014215729
(43) Veröffentlichungstag der Anmeldung: 17.02.2016
(73) Patentinhaber: Deere & Company, Moline, IL 61265 (US)
(72) Erfinder: Gresset, Pascal, 25870 Auxon Dessous (FR)
(74) Vertreter: Reichert, Christian

(56) Entgegenhaltungen:
- EP-A1- 1 707 045
- EP-A1- 1 872 648
- GB-A- 2 326 870
- US-A- 5 181 368

## Beschreibung

Die Erfindung betrifft eine Ballenwickeleinrichtung für eine Rundballenpresse, mit einer Vorratsrolle für Umwicklungsmaterial und einer Anpressvorrichtung, wobei die Anpressvorrichtung in einer Eingriffsstellung mit der Vorratsrolle in Eingriff steht und für eine Wartungsstellung von der Vorratsrolle wegschwenkbar ist, wobei die Anpressvorrichtung an einem an der Anpressvorrichtung gelagerten Angriffspunkt mit Kraftmitteln verbunden ist, die über den Angriffspunkt ein auf die Anpressvorrichtung wirkendes Stellmoment erzeugen, wobei Stellmittel vorgesehen sind, durch welche der Angriffspunkt verlagerbar und damit das Stellmoment veränderbar ist, wobei die Anpressvorrichtung auf einer ortsfest gelagerten Schwenkachse, in eine Eingriffsstellung oder in eine Wartungsstellung schwenkbar, lagerbar ist und eine Lage des Angriffspunkts gegenüber der Schwenkachse über die Stellmittel veränderbar ist. Ferner betrifft die Erfindung eine Rundballenpresse mit einer solchen.

Ballenwickeleinrichtungen für Rundballenpressen sind bekannt. Dabei wird in Rundballenpressen zu einem Rundballen geformtes Pressgut, beispielsweise landwirtschaftliches Erntegut, aber auch Papier- oder Stoffreste, mit einem Umwicklungsmaterial, beispielsweise Netz oder Folie, umwickelt. Derartige Ballenwickeleinrichtungen weisen üblicherweise eine Zuführeinrichtung zum Einführen des Umwicklungsmaterials in eine Presskammer der Rundballenpresse auf, wobei die Zuführeinrichtung in einer Zuführbewegung das Umwicklungsmaterial von einer Vorratsrolle abzieht und in eine angeordnete Zuführöffnung der Presskammer einführt. Die Vorratsrolle ist in der Regel durch eine Anpressvorrichtung mit einer gewissen Vorspannkraft beaufschlagt, damit das Umwicklungsmaterial mit entsprechender Zugspannung um den Ballen gewickelt werden kann. Die Vorratsrolle ist an einem am Rahmen der Ballenpresse ausgebildeten Vorratsraum gelagert und muss bei Verbrauch des Umwicklungsmaterials ausgewechselt werden. Das Auswechseln der Rolle erfolgt unter relativ hohem Kraftaufwand, da zum Einen das Gewicht der Vorratsrolle bewältigt und zum anderen die Anpressvorrichtung von auf der Anpressvorrichtung mit einem Stellmoment wirkenden Kraftmittel gelöst werden muss, bzw. gegen das auf die Anpressvorrichtung wirkende Stellmoment gearbeitet werden muss. Es liegt daher ein Bestreben darin, den Auswechselvorgang der Vorratsrolle zu vereinfachen und bedienfreundlicher zu gestalten.

Eine ähnliche Ballenwickeleinrichtung ist in GB 2326870 A offenbart. Sie zeigt eine Rundballenpresse für landwirtschaftliches Erntegut mit einer dem Pressraum zugeordneten Umwicklungseinrichtung für einen gepressten Rundballen. Das Umwicklungsmaterial ist auf einer in einem Behälter gelagerten achslosen Bahnrolle angeordnet, welche zur Gewährleistung der erforderlichen Abrollspannung mit einer über ein Hebelsystem und eine Zugfeder auf den jeweiligen Außenmantel einwirkenden Bremsstange versehen ist, wobei an einem Hebelarm eines zweiarmigen Schwenkhebels die Bremsstange und an dessen anderem Hebelarm der wirksame Anlenkpunkt der Zugfedern angeordnet ist. Der Anlenkpunkt ist in Abhängigkeit vom jeweiligen Durchmesser des Außenmantels der Bahnrolle in Bezug auf den ortsfesten Schwenkpunkt des Schwenkhebels selbsttätig lageveränderlich angeordnet.

Die der Erfindung zugrunde liegende Aufgabe wird darin gesehen, eine Ballenwickeleinrichtung anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Es wird eine Ballenwickeleinrichtung für eine Rundballenpresse vorgeschlagen, mit einer Vorratsrolle und einer Anpressvorrichtung. Die Anpressvorrichtung steht in einer Eingriffsstellung mit der Vorratsrolle in Eingriff und ist ferner in eine Wartungsstellung von der Vorratsrolle wegschwenkbar, wobei die Anpressvorrichtung an einem an der Anpressvorrichtung gelagerten Angriffspunkt mit Kraftmitteln verbunden ist, die über den Angriffspunkt ein auf die Anpressvorrichtung wirkendes Stellmoment erzeugen. Ferner sind Stellmittel vorgesehen, durch welche der Angriffspunkt verlagerbar und damit das Stellmoment veränderbar ist. Die Anpressvorrichtung ist auf einer gegenüber der Vorratsrolle ortsfest gelagerten Schwenkachse - in eine Eingriffsstellung oder in eine Wartungsstellung schwenkbar - gelagert, wobei eine Lage des Angriffspunkts gegenüber der Schwenkachse über die Stellmittel veränderbar ist. Die ortsfeste Lagerung der Schwenkachse erfolgt beispielsweise an einem Rahmen oder Gehäuseteil der Ballenpresse oder an anderen fest gelagerten Bauteilen. In der Eingriffsstellung liegt die Anpressvorrichtung auf der Vorratsrolle auf bzw. steht mit dieser in Eingriff, wobei die Eingriffsstellung mehrere Schwenkstellungen der Anpressvorrichtung umfasst, da sich die Schwenkposition mit zunehmendem Verbrauch des auf der Vorratsrolle geführten Umwicklungsmaterials verändert. Die Stellmittel umfassen eine in wenigstens einem Schwenkarm der Anpressvorrichtung ausgebildete erste Führungsnut, ein mit einer Stellachse verbundenes und mit einer zweiten Führungsnut ausgebildetes Führungsblech und einen den wenigstens einen Schwenkarm und das Führungsblech verbindenden und in der zweiten Führungsnut verschiebbar gelagerten Führungsbolzen, wobei die Stellachse in der ersten Führungsnut verschiebbar gelagert ist. Das Führungsblech ist vorzugsweise drehfest mit der Stellachse verbunden, so dass ein Verdrehen der Stellachse ein Schwenken des Führungsbleches hervorruft. Infolge dessen wird dann auch der in der zweiten Führungsnut geführte Führungsbolzen verschoben, was wiederum eine Schwenkbewegung des Schwenkarms hervorruft. Durch die Schwenkbewegung des Schwenkarms wird letztendlich die in der ersten Führungsnut geführte Stellachse verschoben. Somit wird durch ein an der Stellachse eingeleitetes Verdrehen eine translatorische Bewegung der Stellachse entlang der ersten Führungsnut erzwungen. Durch Betätigung der Stellmittel kann eine Verlagerung des Angriffspunktes der mit einem Stellmoment auf die Anpressvorrichtung wirkenden Kraftmittel erfolgen, infolge dessen das Stellmoment reduziert oder gar umgekehrt wird, so dass bei einem Auswechselvorgang zum Auswechseln der Vorratsrolle bzw. bei einem Wartungsvorgang die Anpressvorrichtung mit nur geringem Kraftaufwand bzw. ohne Kraftaufwand oder sogar mit unterstützendem Stellmoment von einer Eingriffsstellung in eine Wartungsstellung geschwenkt werden kann. Dadurch kann insbesondere vermieden werden, dass bei einem Auswechselvorgang der Vorratsrolle ein Lösen der Anpressvorrichtung von den das Stellmoment aufbringenden Kraftmitteln erforderlich ist. Ein Wartungsaufwand wird dadurch effektiv reduziert.

In einer Eingriffsstellung der Anpressvorrichtung und in einer Betriebsstellung der Stellmittel der Angriffspunkt derart lagerbar ist, dass das Stellmoment die Anpressvorrichtung auf die Vorratsrolle drückt. In der Eingriffsstellung der Anpressvorrichtung liegt die Anpressvorrichtung mit einem durch das Stellmoment erzeugten Auflagedruck auf der Vorratsrolle auf. Dadurch wird ein Vorspannmoment auf die Vorratsrolle übertragen, so dass bei einem Umwicklungsvorgang das Umwicklungsmaterial unter einer gewissen Spannung um den Ballen gewickelt wird. Die Stellmittel befinden sich dabei in einer Betriebsstellung, in der der Angriffspunkt der Kraftmittel mit maximalem Hebelarm um eine Schwenkachse der Anpressvorrichtung auf die Anpressvorrichtung wirken kann und somit das Stellmoment in dieser Konstellation (Eingriffsstellung der Anpressvorrichtung und Betriebsstellung der Stellmittel) am höchsten ist.

Der Angriffspunkt der das Stellmoment aufbringenden Kraftmittel kann bei aufgebrauchter Vorratsrolle, in einer Eingriffsstellung der Anpressvorrichtung und in einer Wartungsstellung der Stellmittel derart gelagert werden, dass das Stellmoment gegenüber einem Stellmoment in der Betriebsstellung entgegengesetzt wirkt. Durch Verbringen der Stellmittel in die Wartungsstellung wird der Angriffspunkt der Kraftmittel derart verlagert, dass der Angriffspunkt der Kraftmittel auf die entgegengesetzte Seite der Schwenkachse der Anpressvorrichtung gelagert ist, so dass sich das Stellmoment umdreht und somit das Stellmoment in dieser Konstellation (Eingriffsstellung der Anpressvorrichtung und Wartungsstellung der Stellmittel) keinen Anpressdruck in Richtung der Vorratsrolle mehr ausübt. Es wird vielmehr ein Schwenken der Anpressvorrichtung von der Vorratsrolle weg unterstützt. In dieser Konstellation kann die Anpressvorrichtung mit unterstützendem Stellmoment von der Eingriffsstellung in eine Wartungsstellung zum Austauschen der Vorratsrolle geschwenkt werden.

In einer Wartungsstellung der Anpressvorrichtung und in einer Wartungsstellung der Stellmittel kann der Angriffspunkt derart gelagert werden, dass das Stellmoment eine Schwenkbewegung in Richtung der Vorratsrolle unterstützt. In der Wartungsstellung befindet sich die Anpressvorrichtung in einem aufgeschwenkten Zustand, in dem ein freier Zugang zur Vorratsrolle hergestellt ist. Während des Schwenkvorgangs der Anpressvorrichtung aus der Eingriffsstellung heraus in die Wartungsstellung und mit bereits in der Eingriffsstellung der Anpressvorrichtung eingestellter Wartungsstellung der Stellmittel wandert der Angriffspunkt erneut auf die entgegengesetzte Seite der Schwenkachse, so dass bei aufgeschwenkter Anpressvorrichtung, also in der Wartungsstellung der Anpressvorrichtung, sich das Stellmoment von einem in Richtung von der Vorratsrolle weg wirkendes in ein zur Vorratsrolle hin wirkendes Stellmoment umgekehrt hat. Dadurch wird erzielt, dass nach abgeschlossenem Austausch der Vorratsrolle oder nach den Wartungsarbeiten, auch das Zurückschwenken der Anpressvorrichtung von einer Wartungsstellung in eine Eingriffsstellung durch ein Stellmoment unterstützt wird.

Die Stellmittel umfassen ferner einen mit der Stellachse drehfest verbundenen Stellhebel, so dass durch Betätigung des Stellhebels, vorzugsweise durch Schwenken des Hebels um eine zur Stellachse koaxiale Rotationsachse, ein Verdrehen der Stellachse erfolgt.

Die Kraftmittel sind vorzugsweise mit der Stellachse der Stellmittel verbunden, so dass durch die oben geschilderte Verlagerung der in der ersten Führungsnut am Schwenkarm der Anpressvorrichtung geführten Stellachse, eine Verlagerung des Angriffspunktes der Kraftmittel erfolgt.

Die oben erwähnte Ballenwickeleinrichtung eignet sich insbesondere für den Einsatz in einer Rundballenpresse landwirtschaftlicher Art zum Pressen von Erntegut, Schnittgut, Halmgut etc.. Es können jedoch auch andere Einsatzgebiete denkbar sein, beispielsweise im Bereich der Papierindustrie oder des Recyclings von Textilien und anderen Verbrauchsgütern. Als Umwicklungsmaterial eignet sich insbesondere Netz oder Folie, das/die zur formgetreuen Lagerung, zwecks besseren Handlings oder auch zum Schutz des Rundballens vor Witterungseinflüssen in einer oder mehreren Lagen um den Ballen gewickelt wird. Ferner erfolgt der Einsatz von Folie auch zur Lagerung des Rundballens für Silagezwecke.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer Rundballenpresse mit einer Ballenwickeleinrichtung,
- Fig. 2: eine perspektivische Seitenansicht einer Anpressvorrichtung mit Stellmitteln (A) gemäß der Ballenwickeleinrichtung aus Figur 1,
- Fig. 3: eine perspektivische Seitenansicht der Stellmittel aus Figur 2 im Detail,
- Fig. 4: eine weitere perspektivische Seitenansicht der Stellmittel aus Figur 2 im Detail,
- Fig. 5: eine Draufsicht der Stellmittel aus Figur 2 im Detail,
- Fig. 6: eine schematische Seitenansicht der Anpressvorrichtung aus Figur 2 in einer Eingriffsstellung mit Stellmitteln in einer Betriebsstellung mit unaufgebrauchter Vorratsrolle,
- Fig. 7: eine schematische Seitenansicht der Anpressvorrichtung aus Figur 2 in einer Eingriffsstellung mit Stellmitteln in einer Betriebsstellung mit aufgebrauchter Vorratsrolle,
- Fig. 8: eine schematische Seitenansicht der Anpressvorrichtung aus Figur 2 in einer Eingriffsstellung mit Stellmitteln in einer Wartungsstellung mit aufgebrauchter Vorratsrolle,
- Fig. 9: eine schematische Seitenansicht der Anpressvorrichtung aus Figur 2 in Wartungsstellung mit Stellmitteln in Wartungsstellung mit einer neuen unaufgebrauchten Vorratsrolle und
- Fig. 10: eine schematische Seitenansicht der Anpressvorrichtung aus Figur 2 in Eingriffsstellung mit Stellmitteln in Wartungsstellung mit neuer unaufgebrauchten Vorratsrolle.

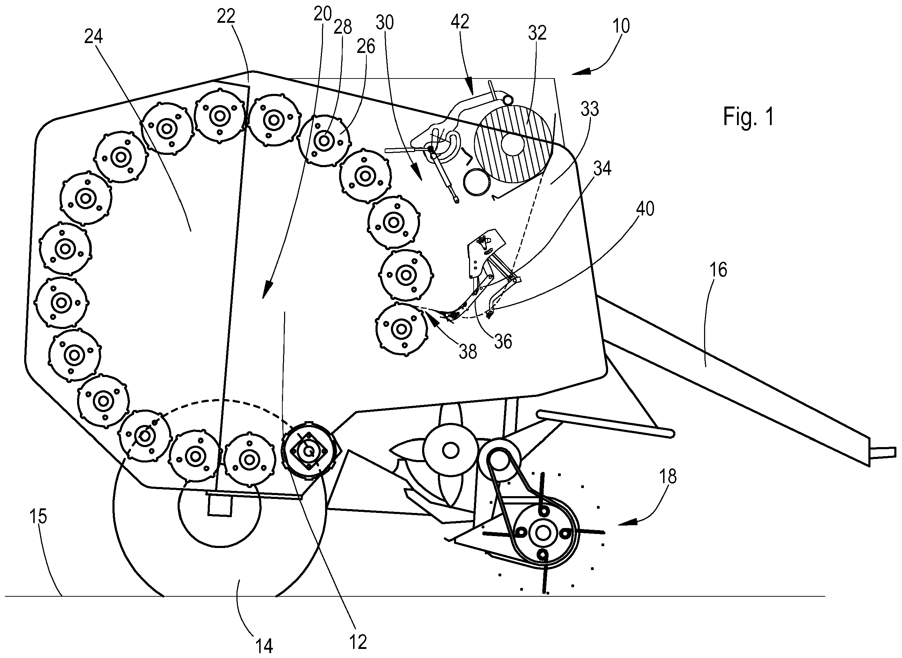

Eine in der Figur 1 schematisch dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper, anschließbar ist.

An einer in Vorwärtsfahrtrichtung vorderen unteren Seite des ersten Gehäuseteils 12 befindet sich in bekannter Weise eine Aufnahme- und Fördereinrichtung 18 für Erntegut, wobei der erste Gehäuseteil 12 einen vorderen Teil eines Ballenpressraums 20 umgibt. An dem rückwärtigen oberen Eckbereich des ersten Gehäuseteils 12 befindet sich ein Lager 22 für ein schwenkbares zweites Gehäuseteil 24, das einen hinteren Teil des Ballenpressraums 20 umgibt. Das zweite Gehäuseteil 24 gibt im geöffneten Zustand (nicht gezeigt) einen Auslass (nicht gezeigt) frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen im Ballenpressraum 20 gepressten Ballen dar.

Die Rundballenpresse 10, mit größenunveränderlichem Ballenpressraum 20 ausgebildet, enthält eine Vielzahl zueinander parallel verlaufender Presselemente zum Pressen von Erntegut in Form von Pressrollen 26 (exemplarisch wurde hier nur ein Pressrolle 26 mit dem Bezugszeichen "26" versehen), deren Rotationsachsen 28 bei geschlossenem zweiten Gehäuseteil 24 auf einem Kreisbogen gelegen sind, und von denen wenigstens einige angetrieben sind. Alternativ kann die Rundballenpresse 10 auch in bekannter Weise als solche mit einem größenveränderlichen Ballenpressraum 20 bzw. als Rundballenpresse 10 mit variablem Ballenpressraum 20 ausgebildet werden, wobei die Presselemente dann, ebenfalls in bekannter Weise, als Riemen, Gurte oder Kettenanordnungen (nicht gezeigt) ausgebildet sein können.

Ferner umfasst die Rundballenpresse 10 eine Ballenwickeleinrichtung 30, die mit einer Vorratsrolle 32 für Umwicklungsmaterial 33 bestückt ist. Als Umwicklungsmaterial kann vorzugsweise ein Netz oder auch Folie eingesetzt werden. Die Ballenwickeleinrichtung 30 umfasst eine Zuführeinrichtung 34 für das Umwicklungsmaterial 33, mittels welcher das Umwicklungsmaterial 33 von der Vorratsrolle 32 in den Ballenpressraum 20 geführt wird.

Nachdem der eigentliche Pressvorgang, also die Erntegutaufnahme und Bildung eines Rundballens durch die Pressrollen 26, abgeschlossen ist, wird eine Fahrt über den Boden 15 unterbrochen, da die Rundballenpresse 10 mit dem Rundballen gefüllt ist und kein weiteres Erntegut mehr in den Ballenpressraum 20 aufgenommen werden soll bzw. kann. Zu dieser Zeit wird auch die Ballenwickeleinrichtung 30 aktiviert, und ein sich dem Pressvorgang anschließender Umwicklungsvorgang eingeleitet. Dabei wird durch eine anhaltende Drehung des sich im Ballenpressraum 20 befindlichen Rundballens das Umwicklungsmaterial 33 um den Rundballen 20 gewickelt. Nachdem ein Umwicklungsvorgang abgeschlossen ist wird der Rundballen durch Öffnen der Auslassklappe (zweiter Gehäuseteil 24) über einer Entladerampe (nicht gezeigt) auf dem Boden 15 abgelassen. Sodann wird die Fahrt mit der Rundballenpresse 10 wieder aufgenommen und ein neuer Pressvorgang beginnt.

Die Zuführeinrichtung 34 umfasst einen schnabelartigen Zuführarm 36, der das Umwicklungsmaterial 33 in Richtung der Presskammer 20 von der Vorratsrolle 32 abzieht. Ein der Zuführeinrichtung 34 zugewandter Bereich der Presskammer 20 ist mit einer Zuführöffnung 38 versehen.

Bei Einleiten eines Umwicklungsvorgangs wir nun durch eine mechanisch ausgelösten Zuführbewegung der Zuführarm 36 in Richtung der Presskammer 20, insbesondere in die Zuführöffnung 38, geführt, so dass das freie Umwicklungsmaterialende mit dem sich in der Presskammer 20 rotierenden Rundballen in Berührung kommen kann und das Umwicklungsmaterial mitgerissen und aufgenommen wird. Durch Rotation des Rundballens wird das Umwicklungsmaterial 33 in ein oder mehreren Lagen um den Umfang des Rundballens gewickelt. Der Umwicklungsvorgang wird mit einem Trennvorgang (nicht gezeigt) durch eine Schneideinrichtung 40, bei dem das um den Rundballen gewickelte Umwicklungsmaterial von dem vorrätigen Umwicklungsmaterial 33 getrennt wird, abgeschlossen.

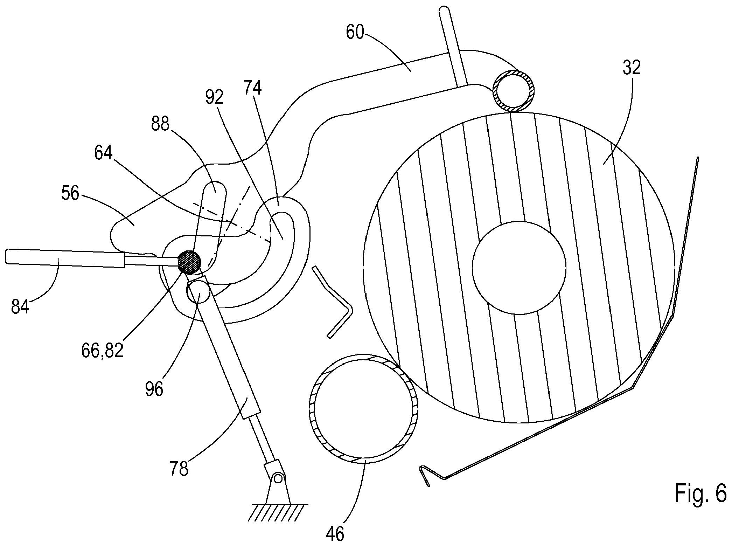

Wie in Figur 1 und in den Figuren 6 bis 10 dargestellt, umfasst die Ballenwickeleinrichtung 30 ferner eine Anpressvorrichtung 42, einen Boden 44 zur Lagerung der Vorratsrolle 32, sowie eine Andruckrolle 46, zur Abstützung und zum Antrieb der Vorratsrolle 32.

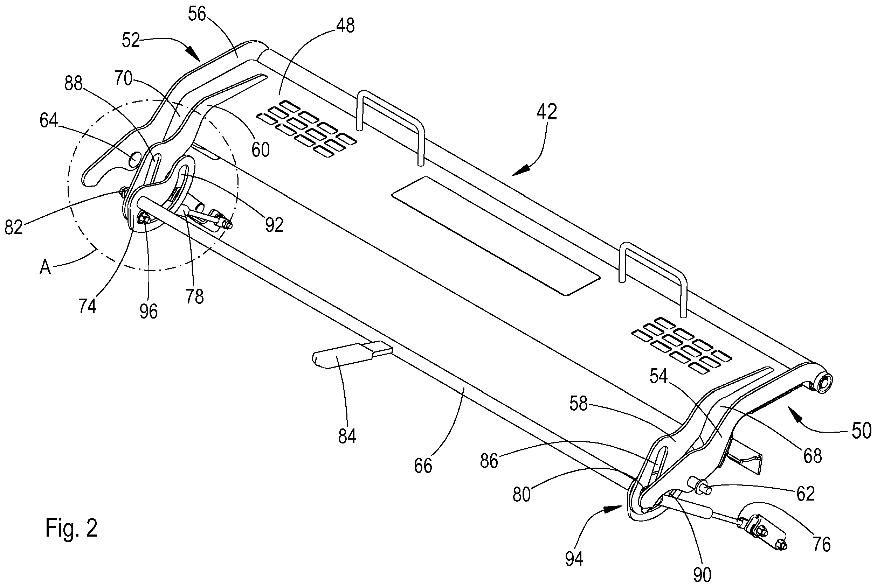

Die Anpressvorrichtung 42 ist im Detail in Figur 2 dargestellt. Sie umfasst einen Anpressrahmen 48, der sich in Breitenrichtung zur Rundballenpresse 10 erstreckt. Der Anpressrahmen 48 ist an seinen seitlichen Enden 50, 52 mit äußeren Schwenkarmen 54, 56 und mit inneren Schwenkarmen 58, 60 versehen, wobei die äußeren Schwenkarme 54, 56 um seitlich des Anpressrahmens 48 ortsfest am Gehäuseteil 12 gelagerte Schwenkachsen 62, 64 und die inneren Schwenkarme 58, 60 um eine sich mittig entlang des Anpressrahmens 48 erstreckende Stellachse 66 schwenkbar gelagert sind. Die äußeren und inneren Schwenkarme 54, 58 bzw. 56, 60 sind über den Anpressrahmen 48 fest miteinander verbunden, wobei die äußeren und inneren Schwenkarmen 54, 58 bzw. 56, 60 jeweils zueinander parallel beabstandet angeordnet sind, so dass jeweils zwischen den äußeren und inneren Schwenkarmen 54, 58 bzw. 56, 60 ein Spalt 68, 70 ausgebildet ist. Ferner umfasst die Anpressvorrichtung 42 Führungsbleche 72, 74 die beidseitig des Anpressrahmens 48 drehfest mit der Stellachse 66 verbunden und innenliegend neben den inneren Schwenkarmen 56, 60 angeordnet sind.

Ferner sind unterhalb und beidseitig des Anpressrahmens 48 Kraftmittel 76, 78 in Form von Gasdruckfedern angeordnet, die sich einenends am Gehäuseteil 12 abstützen und anderenends im Bereich des Spaltes 68 bzw. 70 mit der Stellachse 66 verbunden sind, wobei die Enden der Stellachse 66 als Angriffspunkte 80, 82 dienen. An Stelle der Gasdruckfedern können hier auch andere Federsysteme wie Torsionsfedern oder Schraubenfeder zum Einsatz kommen. Die Stellachse 66 ist ferner mit einem mittig zur Stellachse 66 angeordneten Stellhebel 84 drehfest verbunden, welcher sich senkrecht zur Stellachse 66 erstreckt.

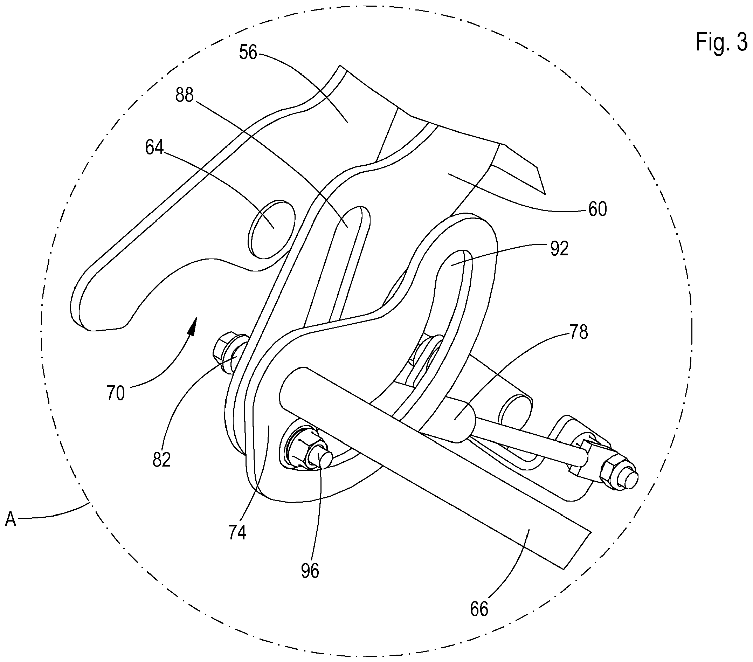

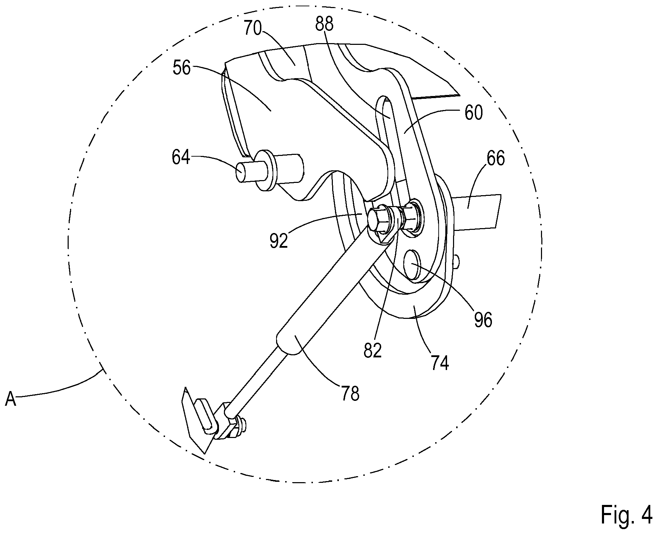

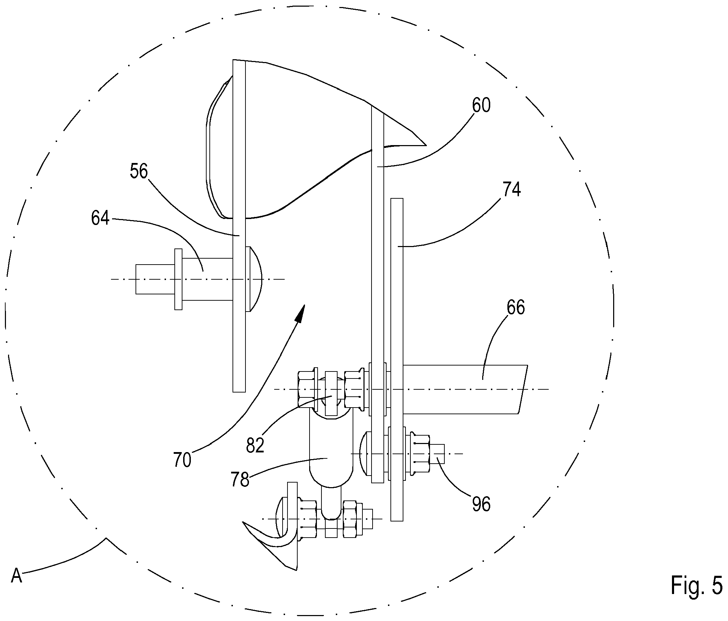

Wie im Detail in den Figuren 3 bis 10 zu erkennen ist, weisen die inneren Schwenkarme 58, 60 jeweils eine 1-förmige erste Führungsnut 86, 88 und die Führungsbleche 72, 74 jeweils eine kreisbogenförmige zweite Führungsnut 90, 92 auf. Ferner sind an den inneren Schwenkarme 58, 60 jeweils ein Führungsbolzen 94, 96 ausgebildet, der sich ausgehend von dem jeweiligen Schwenkarm 58, 60 nach innen in Richtung der zweiten Führungsnut 90, 92 des jeweiligen benachbarten Führungsbleches 74, 76 erstreckt und in der jeweiligen zweiten Führungsnut 90, 92 verschiebbar gelagert ist und damit den jeweiligen inneren Schwenkarm 58, 60 mit dem jeweiligen Führungsblech 74, 76 verbindet. In den ersten Führungsnuten 86, 88 der inneren Schwenkarme 58, 60 wird die Stellachse 66 derart geführt, dass der jeweilige innere Schwenkarm 58, 60 zwischen dem jeweiligen Angriffspunkt 80, 82 und dem jeweiligen Führungsblech 72, 74 angeordnet ist. Das oben Beschriebene ist im Detail für die in Figur 2 linke Seite der Anpressvorrichtung 42 in den Figuren 3, 4 und 5 dargestellt.

Die Stellachse 66, der Stellhebel 84, die Führungsbleche 72, 74, die Führungsnuten 90, 92 sowie die Führungsbolzen 94, 96 stellen somit Stellmittel (A) dar, durch die der jeweilige Angriffspunkt 80, 82 des jeweiligen Kraftmittels 76, 78 verlagerbar ist, wie im Folgenden für die oben genannte rechte Seite der Anpressvorrichtung 42 in den Figuren 6 bis 10 dargestellt ist.

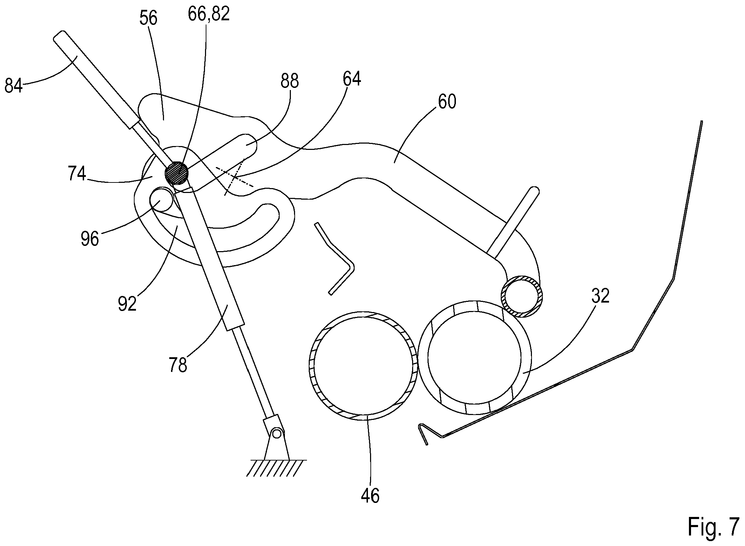

Ausgehend von einer unaufgebrauchten Vorratsrolle 32, einer Eingriffsstellung für die Anpressvorrichtung 42 und einer Betriebsstellung für die Stellmittel (A) gemäß den Figuren 6 und 7, befindet sich der Angriffspunkt 82 bzw. die Stellachse 66 am Ende eines kurzen Schenkels der 1-förmigen ersten Führungsnut 88, so dass ein die Anpressvorrichtung 42 auf die Vorratsrolle 32 drückendes Stellmoment erzeugt wird und der Anpressrahmen 48 auf die Vorratsrolle 32 gedrückt wird. Der Führungsbolzen 96 befindet sich in einer Anschlagsstellung an einem ersten Ende der zweiten Führungsnut 92. Der Hebelarm für das Stellmoment liegt dabei in Bezug auf die Vorratsrolle 32 hinter der Schwenkachse 64 des äußeren Schwenkarmes 56.

Figur 7 zeigt den Zustand der Anpressvorrichtung 42 in einem fortgeschrittenen Betriebsstadium mit aufgebrauchter Vorratsrolle 32. Der Anbaurahmen 48 weist eine gegenüber der Figur 6 zur Vorratsrolle 32 hin geneigte Stellung, wobei Angriffspunkt 82 und Hebelarm für das Stellmoment nahezu unverändert hinter der Schwenkachse 64 liegen. Auch hier wird ein auf die Vorratsrolle 32 drückendes Stellmoment erzeugt.

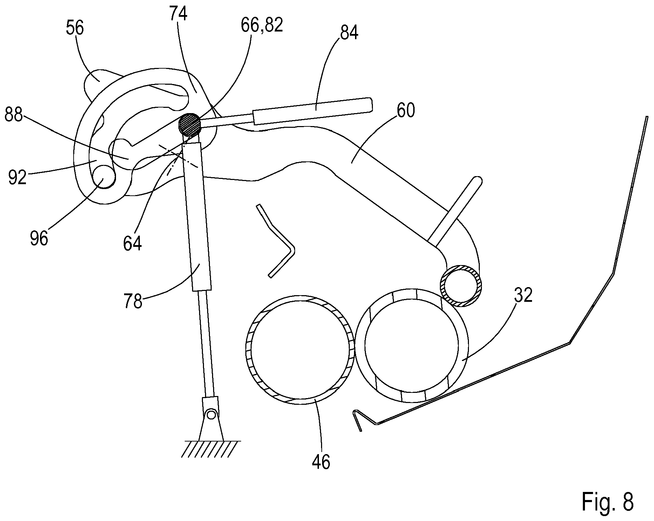

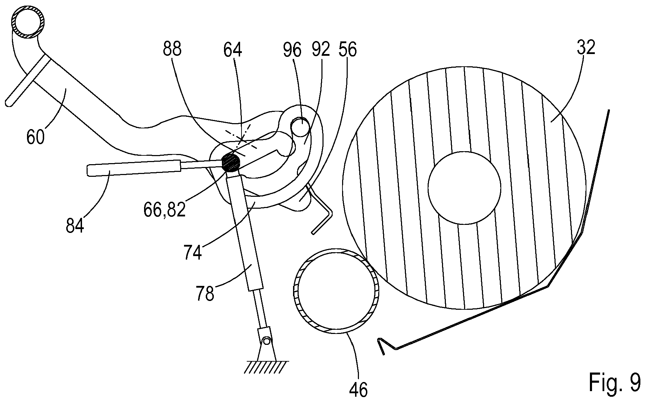

Figur 8 zeigt einen Zustand der Anpressvorrichtung 42, bei dem der Anpressrahmen 48 weiterhin auf der Vorratsrolle 32 ruht, nur dass hier die Stellmittel (A) in einen Wartungszustand zum Auswechseln der Vorratsrolle 32 verbracht wurden. Der Stellhebel 84 wurde dazu in Richtung der Vorratsrolle 32 geschwenkt und damit auch die mit dem Stellhebel 84 drehfest verbundene Stellachse 66 im Uhrzeigersinn verdreht. Das Verdrehen der Stellachse 66 bewirkt gleichzeitig ein Verdrehen des mit der Stellachse 66 drehfest verbundenen Führungsbleches 74 im Uhrzeigersinn. Aufgrund der Verdrehung des Führungsbleches 74 wird der Führungsbolzen 96 entlang der zweiten Führungsnut 92 zum anderen Ende der zweiten Führungsnut 92 geführt, woraufhin die Stellachse 66 aus ihrer ersten Lage am Ende des kurzen Schenkels der 1-förmigen ersten Führungsnut 88 herausbewegt und entlang des weiteren Verlaufs der 1-förmigen ersten Führungsnut 88 zum Ende des langen Schenkels der 1-förmigen ersten Führungsnut 88 bewegt wird und dort zum Anschlag kommt. In dieser Stellung liegt der mit der Stellachse 66 verbundene Angriffspunkt 82 und damit der Hebelarm für das erzeugte Stellmoment zwischen der Schwenkachse 64 und der Vorratsrolle 32, so dass ein die Anpressvorrichtung 42 von der Vorratsrolle 32 weg bewegendes Stellmoment erzeugt wird. Je nach Stärke der Kraftmittel und Gewicht der Anpressvorrichtung kann dies auch zum Abheben des Anpressrahmens 48 von der Vorratsrolle 32 führen, zumindest jedoch unterstützt dies eine auszuführende Schwenkbewegung entgegen einer Gewichtskraft der Anpressvorrichtung 42 entgegen den Uhrzeigersinn zum Verbringen der Anpressvorrichtung 42 in die Wartungsstellung, die in Figur 9 dargestellt ist.

In der in Figur 9 gezeigten Wartungsstellung ist der Bereich oberhalb der Vorratsrolle 32 freigelegt, so dass die Vorratsrolle bequem ausgewechselt werden kann. Dabei verbleiben die Stellmittel (A) weiterhin in Wartungsstellung, wie bereits in Bezug auf Figur 8 beschrieben wurde. Wie in Figur 9 zu erkennen ist, verlagert sich der Angriffspunkt 82 durch die Schwenkbewegung der Anpressvorrichtung 42 in die Wartungsstellung hinter die Schwenkachse 64, so dass erneut ein die Anpressvorrichtung 42 zu der Vorratsrolle 32 hin bewegendes Stellmoment erzeugt wird.

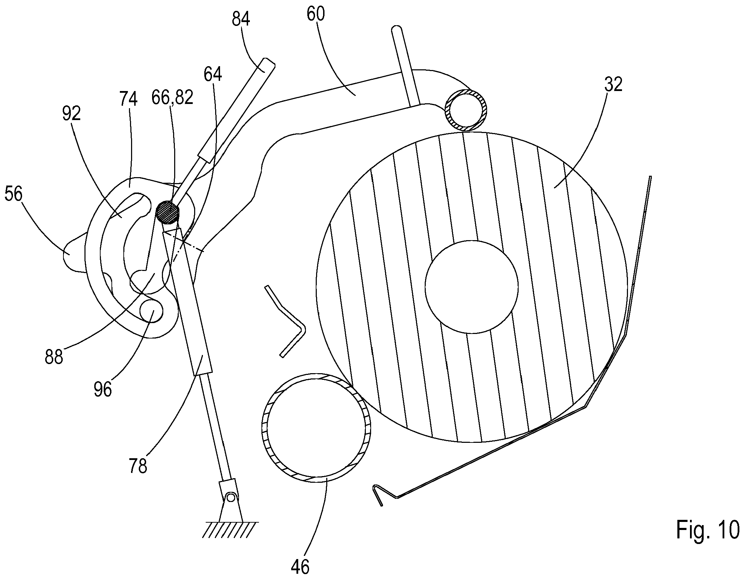

Nach dem erfolgten Wechsel der Vorratsrolle 32 wird der Anpressrahmen 42 wieder in seine Eingriffsstellung zurückgeschwenkt (siehe Figur 10), wobei das in Figur 9 beschriebene Stellmoment eine unterstützende Wirkung erzeugt. Der Angriffspunkt 82 verlagert sich durch die Schwenkbewegung der Anpressvorrichtung 42 wieder in Richtung der Vorratsrolle 32, wobei der Anpressrahmen 48 aufgrund der unaufgebrauchten Vorratsrolle mit größerem Durchmesser nun wieder eine höhere Schwenkstellung einnimmt und der Angriffspunkt noch knapp hinter der Schwenkachse verbleibt. Somit wird auch in der in Figur 10 dargestellten Wartungsstellung der Stellmittel (A) ein die Anpressvorrichtung 42 zu der Vorratsrolle 32 hin bewegendes Stellmoment erzeugt, welches allerdings vergleichbar gering anfällt.

Durch eine Schwenkbewegung des Hebels entgegen den Uhrzeigersinn werden die Stellmittel (A) wieder in Betriebsstellung gebracht, wobei sich ein zu dem gemäß Figur 8 geschilderter entgegengesetzter Verlauf der Verlagerung des Angriffspunktes 82 einstellt und die Anpressvorrichtung 42 sowie die Stellmittel (A) wieder die in Figur 6 dargestellten Stellungen einnehmen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Ballenwickeleinrichtung (30) für eine Rundballenpresse (10), mit einer Vorratsrolle (32) für Umwicklungsmaterial (33) und einer Anpressvorrichtung (42), wobei die Anpressvorrichtung (42) in einer Eingriffsstellung mit der Vorratsrolle (32) in Eingriff steht und für eine Wartungsstellung von der Vorratsrolle (32) wegschwenkbar ist, wobei die Anpressvorrichtung (42) an einem an der Anpressvorrichtung (42) gelagerten Angriffspunkt (80, 82) mit Kraftmitteln (76, 78) verbunden ist, die über den Angriffspunkt (80, 82) ein auf die Anpressvorrichtung (42) wirkendes Stellmoment erzeugen, wobei Stellmittel (A) vorgesehen sind, durch welche der Angriffspunkt (80, 82) verlagerbar und damit das Stellmoment veränderbar ist, wobei die Anpressvorrichtung (42) auf einer ortsfest gelagerten Schwenkachse (62, 64), in eine Eingriffsstellung oder in eine Wartungsstellung schwenkbar, gelagert ist und eine Lage des Angriffspunkts (80, 82) gegenüber der Schwenkachse (62, 64) über die Stellmittel (A) veränderbar ist, **dadurch gekennzeichnet, dass** die Stellmittel (A) eine in wenigstens einem Schwenkarm (58, 60) der Anpressvorrichtung (42) ausgebildete erste Führungsnut (86, 88), ein mit einer Stellachse (66) verbundenes und mit einer zweiten Führungsnut (90, 92) ausgebildetes Führungsblech (72, 74) und einen den wenigstens einen Schwenkarm (58, 60) und das Führungsblech (72, 74) verbindenden und in der zweiten Führungsnut (90, 92) verschiebbar gelagerten Führungsbolzen (94, 96) umfassen, wobei die Stellachse (66) in der ersten Führungsnut (86, 88) verschiebbar gelagert ist.

2. Ballenwickeleinrichtung (30) nach Anspruch 1, **dadurch gekennzeichnet, dass** in einer Eingriffsstellung der Anpressvorrichtung (42) und in einer Betriebsstellung der Stellmittel (A) der Angriffspunkt (80, 82) derart lagerbar ist, dass das Stellmoment die Anpressvorrichtung (42) auf die Vorratsrolle (32) drückt.

3. Ballenwickeleinrichtung (30) nach Anspruch 1 oder 2, **dadurch gekennzeichnet, dass** bei aufgebrauchter Vorratsrolle (32) in einer Eingriffsstellung der Anpressvorrichtung (42) und in einer Wartungsstellung der Stellmittel (A) der Angriffspunkt (80, 82) derart lagerbar ist, dass das Stellmoment gegenüber einem Stellmoment in der Betriebsstellung entgegengesetzt wirkt.

4. Ballenwickeleinrichtung (30) nach einem der vorhergehenden Ansprüche, **dadurch gekennzeichnet, dass** in einer Wartungsstellung der Anpressvorrichtung (42) und in einer Wartungsstellung der Stellmittel (A) der Angriffspunkt (80, 82) derart lagerbar ist, dass das Stellmoment eine Schwenkbewegung in Richtung der Vorratsrolle (32) unterstützt.

5. Ballenwickeleinrichtung (30) nach einem der vorhergehenden Ansprüche, **dadurch gekennzeichnet, dass** die Stellmittel (A) ferner einen mit der Stellachse (66) drehfest verbundenen Stellhebel (84) umfassen.

6. Ballenwickeleinrichtung (30) nach einem der Ansprüche 1 bis 5, **dadurch gekennzeichnet, dass** die Kraftmittel (76, 78) mit der Stellachse (66) verbunden sind.

7. Rundballenpresse (10) mit einer Ballenwickeleinrichtung (30) nach einem der Ansprüche 1 bis 6.

## Claims

1. Bale wrapping device (30) for a round baler (10), with a supply reel (32) for wrapping material (33) and a pressing device (42), wherein the pressing device (42) in an engagement position is in engagement with the supply reel (32) and for a standby position can be pivoted away from the supply reel (32), wherein the pressing device (42) is connected at a contact point (80, 82) positioned on the pressing device (42) to power means (76, 78) which generate via the contact point (80, 82) a controlling torque which acts on the pressing device (42), wherein adjusting means (A) are provided through which the contact point (80, 82) can be shifted and thus the controlling torque can be changed, wherein the pressing device (42) is mounted on a locally fixed pivotal axis (62, 64), capable of pivoting into an engagement position or into a standby position, and a position of the contact point (80, 82) relative to the pivotal axis (62, 64) can be altered via the adjusting means (A), **characterised in that** the adjusting means (A) comprise a first guide groove (86, 88) formed in at least one pivotal arm (58, 60) of the pressing device (42), a guide plate (72, 74) connected to an adjusting axis (66) and formed with a second guide groove (90, 92), and a guide bolt (94, 96) which is mounted displaceable in the second guide groove (90, 92) and connects the at least one pivotal arm (58, 60) and the guide plate (72, 74), wherein the adjusting axis (66) is mounted displaceable in the first guide groove (86, 88).

2. Bale wrapping device (30) according to Claim 1 **characterised in that** in an engagement position of the pressing device (42) and in an operating position of the adjusting means (A) the contact point (80, 82) can be positioned so that the controlling torque presses the pressing device (42) onto the supply reel (32).

3. Bale wrapping device (30) according to Claim 1 or 2 **characterised in that** in the event of a used supply reel (32) in an engagement position of the pressing device (42) and in a standby position of the adjusting means (A) the contact point (80, 82) can be positioned so that the controlling torque acts counter to a controlling torque in the operating position.

4. Bale wrapping device (30) according to one of the preceding claims **characterised in that** in a standby position of the pressing device (42) and in a standby position of the adjusting means (A) the contact point (80, 82) can be positioned so that the controlling torque boosts a pivotal movement in the direction of the supply reel (32).

5. Bale wrapping device (30) according to one of the preceding claims **characterised in that** the adjusting means (A) furthermore comprise a control lever (84) which is connected rotationally secured to the adjusting axis (66).

6. Bale wrapping device (30) according to one of Claims 1 to 5 **characterised in that** the power means (76, 78) are connected to the adjusting axis (66).

7. Round baler (10) having a bale wrapping device (30) according to one of Claims 1 to 6.

## Revendications

1. Dispositif (30) d'enroulement de balles pour presse (10) à balles rondes, le dispositif présentant un rouleau de réserve (32) de matériau d'enroulement (33) et un dispositif de compression (42), le dispositif de compression (42) engageant le rouleau de réserve (32) dans une position d'engagement et pouvant être éloigné par pivotement du rouleau de réserve (32) dans une position de maintenance, le dispositif de compression (42) étant relié à des moyens (76, 78) d'application de force en un point d'engagement (80, 82) monté sur le dispositif de compression (42), les moyens d'application de force exerçant un couple d'ajustement qui agit par l'intermédiaire du point d'engagement (80, 82) sur le dispositif de compression (42), des moyens d'ajustement (A) étant prévus et permettant de déplacer le point d'engagement (80, 82) pour ainsi modifier le couple d'ajustement, le dispositif de compression (42) étant monté à pivotement dans une position d'engagement ou dans une position de maintenance sur un axe de pivotement (62, 64) monté fixement, la position du point d'engagement (80, 82) par rapport à l'axe de pivotement (62, 64) pouvant être modifiée par l'intermédiaire des moyens d'ajustement (A),
**caractérisé en ce que**
les moyens d'ajustement (A) comprennent une première rainure de guidage (86, 88) formée dans au moins un bras pivotant (58, 60) du dispositif de compression (42), une tôle de guidage (72, 74) reliée à un axe d'ajustement (66) et configurée avec une deuxième rainure de guidage (90, 92) et un goujon de guidage (94, 96) reliant la tôle de guidage (72, 74) et monté à coulissement dans la deuxième rainure de guidage (90, 92), l'axe d'ajustement (66) étant monté à coulissement dans la première rainure de guidage (86, 88).

2. Dispositif (30) d'enroulement de balles selon la revendication 1, **caractérisé en ce que** le point d'engagement (80, 82) peut être monté dans une position d'engagement du dispositif de compression (42) et dans une position de fonctionnement des moyens d'ajustement (A) de telle sorte que le couple d'ajustement repousse le dispositif de compression (42) sur le rouleau de réserve (32).

3. Dispositif (30) d'enroulement de balles selon les revendications 1 ou 2, **caractérisé en ce que** lorsque le rouleau de réserve (32) est épuisé, le point d'engagement (80, 82) peut être monté dans un position d'engagement du dispositif de compression (42) et dans une position de maintenance des moyens d'ajustement (A) de telle sorte que le couple d'ajustement agisse en sens opposé du couple d'ajustement appliqué en position de fonctionnement.

4. Dispositif (30) d'enroulement de balles selon l'une des revendications précédentes, **caractérisé en ce que** lorsque le dispositif de compression (42) est en position de maintenance et les moyens d'ajustement (A) sont dans une position de maintenance, le point d'engagement (80, 82) peut être monté de telle sorte que le couple d'ajustement soutienne un déplacement de pivotement en direction du rouleau de réserve (32).

5. Dispositif (30) d'enroulement de balles selon l'une des revendications précédentes, **caractérisé en ce que** les moyens d'ajustement (A) comprennent en outre un levier d'ajustement (84) relié à rotation solidaire de l'axe d'ajustement (66).

6. Dispositif (30) d'enroulement de balles selon l'une des revendications 1 à 5, **caractérisé en ce que** les moyens (76, 78) d'application de force sont reliés à l'axe d'ajustement (66).

7. Presse (10) à balles rondes dotée d'un dispositif (30) d'enroulement de balles selon l'une des revendications 1 à 6.
